# FASCICULE DE BREVET EUROPEEN

(11) **EP 0 802 868 B1**
(45) Date de publication et mention de la délivrance du brevet: **17.03.1999**
(21) Numéro de dépôt: 95942740.2
(22) Date de dépôt: 13.12.1995
(51) Int. Cl.: B60T 13/565, B60T 13/569

(54) **DISPOSITIF DE FREINAGE ASSISTE A COURSE REDUITE**
BREMSKRAFTVERSTÄRKER MIT REDUZIERTEM PEDALWEG
REDUCED-STROKE POWER BRAKING DEVICE

(30) Priorité: 18.01.1995 FR 9500489
(43) Date de publication de la demande: 29.10.1997
(73) Titulaire: Bosch Systemes de Freinage, 93700 Drancy (FR)
(72) Inventeur: CASTEL, Philippe, F-75005 Paris (FR)
(86) Numéro de dépôt international: FR9501664
(87) Numéro de publication internationale: WO9622208

(56) Documents cités:
- EP-A- 0 257 360
- FR-A- 2 696 141

## Description

La présente invention concerne un dispositif de freinage assisté, du type de ceux qui sont utilisés pour assurer le freinage des véhicules automobiles.

De tels dispositifs de freinage sont connus depuis longtemps et comprennent de façon classique d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de la force d'entrée sur une tige de commande contrôlant l'ouverture d'un clapet, pour exercer la force d'actionnement sur le piston hydraulique principal, le servomoteur comportant une enveloppe rigide séparée de façon étanche en deux chambres au moyen d'une cloison mobile susceptible d'être sollicitée par une différence de pression entre les deux chambres résultant de l'ouverture du clapet et d'entraîner un piston pneumatique mobile par rapport à l'enveloppe et portant le clapet, la force d'entrée étant transmise par l'intermédiaire d'un disque de réaction sur lequel s'appuie également le piston pneumatique pour lui fournir une partie au moins de la force d'assistance.

Un dispositif de ce type est bien connu dans l'art antérieur et se trouve par exemple décrit dans le document US-A-4 491 058.

On a cherché depuis longtemps à perfectionner ces dispositifs pour que la course totale de la tige de commande, et donc disponible pour la pédale de frein, soit le résultat d'un compromis entre deux paramètres contradictoires, de façon à obtenir ce qu'il est convenu d'appeler dans la technique une bonne sensation pédale.

En effet, la course de la tige de commande doit être juste suffisante pour que le conducteur puisse contrôler de façon optimale de la décélération du véhicule lors d'un freinage. Cependant, la course totale de la tige de commande se trouve nécessairement allongée d'une course initiale relativement importante au cours de laquelle la pression hydraulique dans le circuit de freinage atteint une valeur minimale, au delà de laquelle toute augmentation de pression résultera en une action effective de freinage.

Pour résoudre ce problème, on a déjà proposé une solution, par exemple dans le document FR-A-2 696 141, correspondant au préambule de la revendication principale, et selon laquelle le piston hydraulique principal du maître-cylindre comporte lui-même un cylindre mobile creux communiquant avec le maître-cylindre, qui reçoit une partie au moins de la force d'assistance et à l'intérieur duquel coulisse sur une distance axiale L, de façon étanche et suivant la direction axiale, un piston hydraulique secondaire susceptible de recevoir au moins la force d'entrée, la cloison mobile étant montée coulissante sur le piston pneumatique de manière à pouvoir coulisser sur la distance axiale L par rapport à lui en direction du maître-cylindre, depuis une position relative initiale dans laquelle elle est en butée vers l'arrière contre le piston pneumatique, et appuyant au moins indirectement sur le cylindre mobile vers l'avant lorsqu'elle est sollicitée par une différence de pression.

Une telle solution permet d'obtenir la pression minimale de freinage en réponse à une course initiale de la tige de commande très faible, et même imperceptible pour le conducteur du véhicule.

Cette solution implique toutefois une augmentation de la course du piston principal du maître-cylindre, et corrélativement une augmentation de la longueur axiale de celui-ci, et par conséquent une augmentation de la longueur du dispositif de freinage, dont l'encombrement total peut interdire son implantation dans le compartiment moteur de certains véhicules.

La présente invention a donc pour objet de proposer un dispositif de freinage assisté dont l'efficacité se manifeste dès le début du freinage, c'est-à-dire après une très faible course initiale de la pédale de frein, et dont l'encombrement ne soit pas supérieur à celui d'un dispositif de freinage classique, tel qu'illustré par exemple par le premier document précité.

Dans ce but, l'invention propose un dispositif de freinage assisté du type défini plus haut, dans lequel un piston annulaire est maintenu solidaire du piston hydraulique principal lorsque la course de ce dernier dans l'alésage est inférieure à la distance axiale L, le piston annulaire étant susceptible de coulisser sur le piston hydraulique principal lorsque la course de ce dernier dans l'alésage est supérieure à la distance axiale L.

De la sorte, le piston hydraulique principal présente une section variable en fonction de sa position dans l'alésage, cette section étant notablement plus importante sur la première partie de sa course. Une telle section agrandie permet ainsi d'obtenir la pression minimale de freinage désirée après une course du piston correspondant à la distance axiale L.

D'autres buts, caractéristiques et avantages de l'invention ressortiront clairement de la description qui suit d'un mode de réalisation, donné à titre indicatif et nullement limitatif, en référence aux dessins annexés, sur lesquels :
- la Figure 1 est une vue en coupe partielle d'un dispositif de freinage assisté de type connu par exemple du deuxième document précité;
- la Figure 2 est une vue en coupe partielle et schématique d'un dispositif de freinage assisté conforme à la présente invention, représenté en position de repos;
- la Figure 3 est une vue semblable à celle de la Figure 2, à plus grande échelle, le dispositif étant représenté dans une deuxième position, et
- la Figure 4 est une vue semblable à celle de la Figure 3, le dispositif étant représenté dans une troisième position.

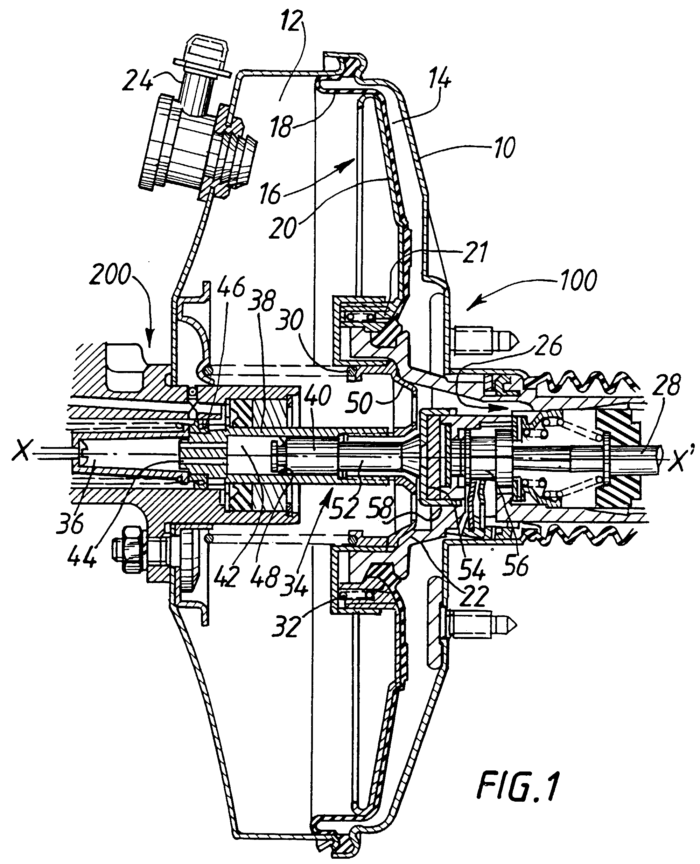

La Figure 1 représente une vue en coupe partielle d'un dispositif de freinage assisté, constitué d'un servomoteur pneumatique d'assistance au freinage, désigné dans son ensemble par la référence 100, et d'un maître-cylindre, désigné dans son ensemble par la référence 200.

Le servomoteur 100 est prévu pour être fixé de façon habituelle sur un tablier de séparation entre un compartiment moteur et l'habitacle d'un véhicule, et pour être actionné par une pédale de freinage située dans cet habitacle. Le maître-cylindre 200 commandant le circuit de freinage hydraulique du véhicule est prévu pour être fixé sur le servomoteur 100.

Par convention, on appelle "avant" du dispositif de freinage la partie de ce dernier tournée vers le maître-cylindre 200 et "arrière" la partie tournée vers la pédale de frein. Sur les Figures, l'avant est ainsi à gauche et l'arrière à droite.

Le servomoteur 100 comprend lui-même une enveloppe 10 en forme de coquille d'axe X-X' et séparée de façon étanche en une chambre avant 12 et une chambre arrière 14 par une structure de cloison mobile 16 comprenant une membrane déroulante 18 et une jupe rigide 20 reliées à un piston pneumatique 22, l'ensemble étant mobile à l'intérieur de l'enveloppe 10 selon l'axe X-X'.

De façon plus précise, la cloison mobile 16 est, de préférence par l'intermédiaire de la partie centrale 21 de sa jupe rigide 20, montée librement coulissante par rapport au piston pneumatique 22.

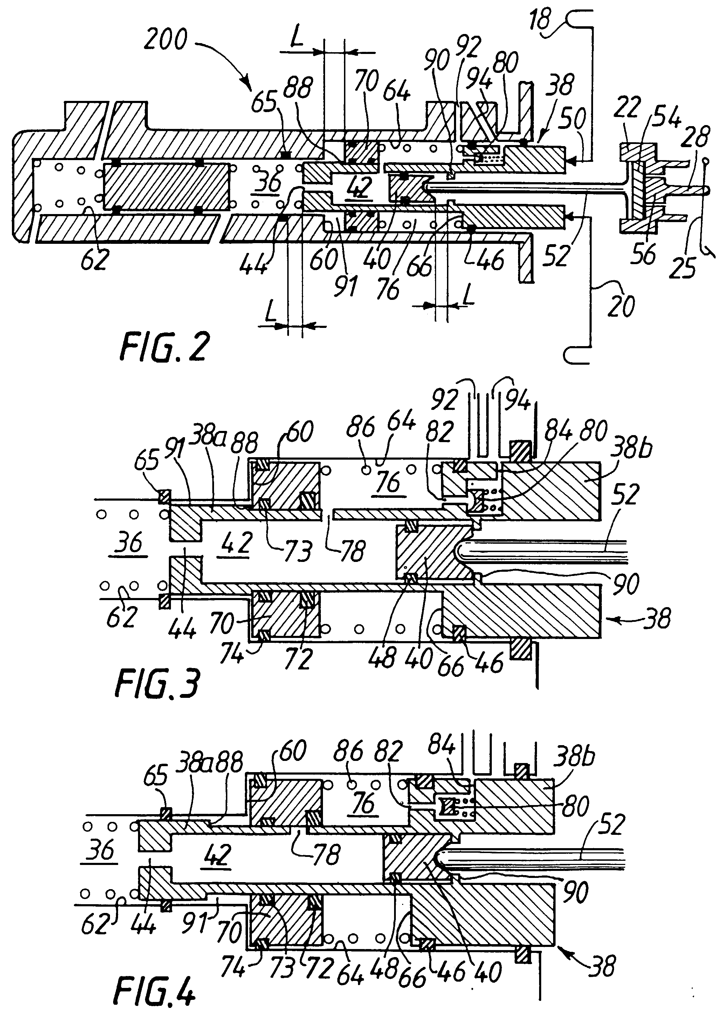

La chambre avant 12 est en permanence raccordée à une source de dépression (non représentée) par l'intermédiaire d'un clapet anti-retour 24. La pression dans la chambre arrière 14 est contrôlée par un clapet 26, commandé par une tige de commande 28 disposée selon l'axe X-X' et reliée à une pédale de frein 25 (Figure 2).

Le piston 22 est sollicité vers sa position arrière de repos, vers la droite, par un ressort 30 prenant appui sur la face avant de l'enveloppe 10, et la jupe rigide 20 est elle-même sollicitée vers sa position arrière de repos, vers la droite, par un ressort 32 prenant appui sur le piston 22.

Le maître-cylindre 200 comporte un piston hydraulique principal 34, qui est composite et qui comprend d'une part un cylindre 38 mobile et creux, et d'autre part un piston hydraulique secondaire 40.

Le volume intérieur 42 du cylindre mobile 38 communique avec le volume intérieur 36 du maître-cylindre par l'intermédiaire d'au moins un orifice, tel que 44, ménagé dans le cylindre mobile 38 suivant une direction axiale.

En dehors du passage de fluide que permettent ces passages 44 entre le volume intérieur 36 du maître-cylindre 200 et celui du cylindre mobile 38, ce cylindre mobile 38 coulisse de façon étanche dans le maître-cylindre 200, l'étanchéité étant obtenue grâce au moins à une coupelle annulaire 46.

Le piston hydraulique secondaire 40, quant à lui, coulisse à l'intérieur du cylindre mobile 38, de façon étanche grâce à une coupelle annulaire 48. Par ailleurs, le cylindre mobile 38 est rendu solidaire de la jupe rigide 20 au moyen d'une pièce de liaison 50.

Le piston hydraulique secondaire 40 constitue le prolongement axial d'une tige de poussée 52 du servomoteur, susceptible de lui transmettre d'une part la force d'entrée exercée sur la tige de commande 28, et d'autre part une fraction de la force d'assistance développée par le piston pneumatique 22, ces forces étant transmises, de façon en soi connue, par l'intermédiaire d'un disque de réaction 54 sur une face duquel s'appuient ce piston pneumatique et un plongeur 56 actionné par la tige de commande, et dont l'autre face s'appuie sur une surface d'appui 58 solidaire de la tige de poussée 52.

On pourra prévoir de munir le cylindre 38 d'une butée pour limiter le libre coulissement du piston hydraulique secondaire 40 par rapport au cylindre mobile creux 38, et par conséquent limiter le libre coulissement de la cloison mobile 16 par rapport au piston pneumatique 22. La même limitation pourra être obtenue au moyen de butées prévues sur la partie centrale 21 de la jupe rigide 20 et sur le piston pneumatique 22.

Le fonctionnement du dispositif qui vient d'être décrit est le suivant.

Lorsque la tige de commande 28 est dans la position de repos représentée sur la Figure 1, c'est à dire vers la droite, le clapet 26 établit normalement une communication entre les deux chambres 12 et 14 du servomoteur.

La chambre arrière 14 étant alors soumise à la même dépression que la chambre avant 12, le piston 22 et la jupe rigide 20 sont repoussés vers la droite, en position de repos, par les ressorts 30 et 32 respectivement.

L'actionnement de la tige de commande 28 vers la gauche a pour effet, dans un premier temps, de déplacer le clapet 26 de façon qu'il isole l'une de l'autre les chambres 12 et 14 puis, dans un deuxième temps, de déplacer ce clapet de façon qu'il ouvre la chambre arrière 14 à la pression atmosphérique.

La différence des pressions régnant dans les deux chambres 12 et 14, alors ressentie par la membrane 18, exerce sur la cloison mobile 20 une poussée qui tend à les déplacer vers l'avant. La précontrainte au repos du ressort 32 étant notablement inférieure à celle du ressort 30, la cloison mobile 20 se déplace seule en comprimant le ressort 32.

La cloison mobile 20 entraîne dans son mouvement le piston hydraulique principal 38 par l'intermédiaire de la pièce de liaison 50, faisant ainsi augmenter la pression hydraulique dans le volume intérieur 36 du maître-cylindre 200, qui s'élève de façon nette et s'établit, par circulation de fluide hydraulique à travers les passages 44, dans le volume interne 42 du cylindre mobile 38.

Le mouvement de la cloison mobile 20 se poursuit jusqu'à ce qu'elle vienne en butée sur le piston pneumatique 22, ou jusqu'à ce que le cylindre creux 38 vienne en butée sur le piston hydraulique secondaire 40. La pression obtenue dans cette phase de fonctionnement correspond à la pression minimale nécessaire pour amorcer le freinage. Cette pression minimale a ainsi été obtenue pour une course très faible de la tige de commande.

Il n'y a plus à ce moment de mouvement relatif entre la jupe 20 et le piston 22 qui se déplacent alors ensemble quand le piston pneumatique 22 se déplace lui-même, c'est à dire si le conducteur du véhicule augmente son effort sur la pédale de frein.

La pression dans le volume interne 42 fait de plus apparaître, sur le piston hydraulique secondaire 40, une force qui tend à repousser vers l'arrière ce piston secondaire 40 vers la tige de commande 28, c'est-à-dire vers la droite sur la figure 1. Cette force sur le piston hydraulique secondaire constitue ainsi une force de réaction dépendant de la force d'assistance, et s'opposant à la force transmise à travers le disque de réaction 54, et permettant le contrôle de la force d'assistance par la force d'entrée, au moyen d'une réaction mixte, c'est à dire à la fois hydraulique et mécanique.

Un tel dispositif permet donc d'obtenir une pression relativement élevée dans le maître-cylindre, du fait que la jupe 20 et le piston hydraulique principal 34 du maître-cylindre ont accompli une course supérieure à celle de la tige de commande 28, une partie de cette course du piston 34 ayant été imperceptible pour le conducteur. Il en résulte donc que la longueur du maître-cylindre doit être telle qu'elle permette au piston hydraulique principal 34 d'effectuer cette course supplémentaire du piston 34 par rapport à celle de la tige de commande 28, additionnée de la course nécessaire pour obtenir la pression et l'effort de freinage effectif désirés.

La présente invention a précisément pour but d'éviter cet inconvénient, et de permettre au dispositif de freinage de fonctionner comme on vient de le décrire, et donc de permettre au piston hydraulique principal 34 d'effectuer une course supplémentaire pour obtenir la pression minimale de freinage, sans allonger pour autant de façon sensible la longueur totale du maître-cylindre.

Comme on l'a représenté sur les Figures 2 à 4, l'alésage dans lequel coulisse le cylindre creux 38 est étagé, et comporte un épaulement radial 60 entre la partie avant 62 de plus petit diamètre et la partie arrière 64 de plus grand diamètre.

Le cylindre mobile creux 38 est lui-même étagé, et comporte un épaulement radial 66 entre ses parties avant 38a et arrière 38b coopérant respectivement avec les parties d'alésage 62 et 64.

Un joint annulaire 65 est disposé dans la partie d'alésage 62, et est susceptible de coopérer avec la partie avant 38a du cylindre 38 après une course prédéterminée de ce dernier, comme on le verra par la suite.

Un piston annulaire 70 est susceptible de coulisser de façon étanche sur le cylindre 38a grâce à deux joints 72 et 73, et dans l'alésage 64 grâce à un joint 74. Le piston annulaire 70, l'alésage 64, l'épaulement 66 et le cylindre 38a définissent ainsi une chambre annulaire 76 de volume variable, susceptible de communiquer avec le volume intérieur 42 du cylindre mobile 38 par au moins un passage radial 78.

Le cylindre 38 comporte encore un clapet anti-retour taré 80, disposé entre un passage 82 (Figures 3 et 4) de communication avec la chambre annulaire 76, et un passage radial 84 débouchant à la surface extérieure de la partie 38b du cylindre 38, en arrière de la coupelle annulaire 46.

Enfin, un ressort de compression 86 est disposé dans la chambre 76 entre l'épaulement 66 du cylindre 38 et le piston annulaire 70, pour solliciter ce dernier en permanence vers l'avant. Une butée 88, constituée par exemple d'un épaulement, est formée sur la partie 38a du cylindre 38 pour définir la position de repos du piston annulaire 70 par rapport au cylindre 38. Une butée 90 est de même formée à l'intérieur du cylindre 38 pour limiter le mouvement vers l'arrière du piston hydraulique secondaire 40 par rapport au cylindre 38.

Comme on le voit sur la Figure 2, en position de repos, la butée 88 maintient le piston annulaire 70 à une distance axiale L de l'épaulement 60 de l'alésage, et la butée 90 est située à la même distance axiale L en arrière du piston hydraulique secondaire 40. De plus, le joint annulaire 65 est à une distance axiale L en avant de l'extrémité avant de la partie 38a du cylindre 38.

Au repos, toutes les pièces mobiles occupent leur position arrière représentée sur la Figure 2, sauf le piston annulaire 70 qui est en appui vers l'avant sur la butée 88. Le volume intérieur 36 du maître-cylindre, le volume interne 42 du cylindre mobile 38, le volume 91 situé entre le piston annulaire 70 et l'épaulement 60 et la chambre annulaire 76 communiquent entre eux et avec un réservoir de fluide sous basse pression (non représenté) par l'intermédiaire d'un orifice de dilatation 92

Comme on l'a vu plus haut, l'actionnement de la pédale 25 provoque le mouvement de la tige de commande 28 et du plongeur 56 vers la gauche. Le clapet 26, dans un premier temps, isole l'une de l'autre les chambres 12 et 14 puis, dans un deuxième temps, ouvre la chambre arrière 14 à la pression atmosphérique.

La différence des pressions régnant dans les deux chambres 12 et 14 exerce sur la cloison mobile 20 une poussée qui tend à la déplacer seule vers l'avant, le piston pneumatique 22 étant maintenu dans sa position arrière sous l'effet de la précontrainte du ressort 32.

La cloison mobile 20 entraîne dans son mouvement le piston hydraulique principal 38 par l'intermédiaire de la pièce de liaison 50. Dès que la coupelle annulaire 46 a dépassé l'orifice de dilatation 92, la pression hydraulique dans les volumes intérieurs 36 du maître-cylindre et 42 du cylindre 38, dans le volume 91 et dans la chambre annulaire 76 commence à s'élever.

Le clapet anti-retour 80 étant taré pour ne pas s'ouvrir dans cette phase de fonctionnement, le piston annulaire 70 accompagne le cylindre 38 dans son mouvement sous l'action du ressort 86, de sorte que le volume balayé par cet équipage mobile cylindre 38/piston 70 est défini par la section de l'alésage 64, diminuée de la section du piston hydraulique secondaire 40 qui reste fixe dans cette phase de fonctionnement.

Ce mouvement se poursuit sur toute la distance axiale L, de même que l'augmentation de la pression hydraulique, jusqu'à ce que le piston annulaire 70 vienne en butée contre l'épaulement 60, la butée 90 à l'intérieur du cylindre 38 venant pratiquement simultanément au contact du piston hydraulique secondaire 40 en fonction des tolérances de fabrication, de même que l'extrémité avant de la partie 38a du cylindre 38 vient coopérer avec le joint annulaire 65.

Les différents éléments du maître-cylindre sont alors dans la position qui a été représentée sur la Figure 3. Le volume 91 se trouve alors isolé du reste du maître-cylindre puisqu'il est alors confiné par les joints 73, 74 et 65. D'autre part, le clapet anti-retour 80 est taré pour s'ouvrir à la valeur de la pression atteinte à cet instant du fonctionnement.

Il ne peut donc plus y avoir à ce moment de mouvement relatif entre le cylindre 38 et le piston secondaire 40, ni entre la jupe 20 et le piston 22 qui se déplacent alors ensemble quand le piston pneumatique 22 se déplace lui-même, c'est à dire si le conducteur du véhicule augmente son effort sur la pédale de frein.

Dans cette hypothèse, le cylindre 38 et le piston secondaire 40 se déplacent ensemble, de sorte que le passage radial 78 dépasse le joint annulaire 72 tout en restant en arrière du joint 73, fermant ainsi la communication entre la chambre annulaire 76 et le volume intérieur 42 du cylindre creux 38 d'une part et le volume intérieur 36 du maître-cylindre d'autre part peu après que le cylindre 38 ait parcouru la distance axiale L augmentée de la longueur axiale des joints 72 et 65. Le clapet 80 étant alors ouvert permet au fluide contenu dans la chambre annulaire 76 de retourner au réservoir par le passage radial 84 et l'orifice de dilatation 92 ou un orifice de compensation 94 communiquant avec le réservoir de fluide sous basse pression, le ressort 86 se comprimant progressivement.

La pression dans les volumes 36 et 42 continue ainsi d'augmenter, le volume balayé par cet équipage mobile cylindre 38/piston secondaire 40 étant défini par la section de la partie avant 38a du cylindre 38 coulissant dans le piston annulaire 70, qui reste fixe dans cette phase de fonctionnement. De façon avantageuse, on pourra prévoir que cette section soit égale à la section de la partie d'alésage de plus petit diamètre 62, cette disposition permettant d'utiliser un maître-cylindre en tandem comme on l'a représenté sur la Figure 2.

Comme on l'a vu plus haut, cette pression agissant sur le piston hydraulique secondaire 40 crée une force de réaction dépendant de la force d'assistance, et permettant le contrôle de la force d'assistance par la force d'entrée, au moyen d'une réaction mixte, c'est à dire à la fois hydraulique et mécanique.

Les différents éléments du maître-cylindre sont alors dans la position qui a été représentée sur la Figure 4. Le fonctionnement du maître-cylindre 200 et du servomoteur 100 est alors identique à celui d'un dispositif de freinage assisté classique.

Lorsque le conducteur du véhicule relâche son effort sur la pédale de frein pour mettre fin à l'action de freinage, tous les éléments mobiles sont rappelés vers l'arrière. En particulier, le clapet anti-retour 80 se referme, de sorte que le volume de la chambre annulaire 76 ne peut augmenter. Le piston annulaire 70 accompagne donc le cylindre 38 dans son mouvement vers l'arrière, jusqu'à ce que la coupelle annulaire 46 découvre l'orifice de dilatation 92.

A ce moment, l'extrémité avant de la partie 38a du cylindre 38 a cessé de coopérer avec le joint annulaire 65, de sorte que la communication entre le volume 91 et le reste du maître-cylindre a été rétablie et que le ressort 86 peut repousser le piston annulaire 70 vers l'avant, en appui sur la butée 88. Tous les éléments reprennent alors leur position de repos représentée sur la Figure 2, autorisant ainsi une nouvelle action de freinage telle qu'on vient de la décrire.

On voit donc bien qu'on a réalisé un dispositif de freinage assisté conforme au but que s'était fixé la présente invention. En effet, dans la première phase de fonctionnement pour obtenir la pression minimale de freinage effectif, pendant laquelle la cloison mobile 16 coulisse par rapport au piston pneumatique 22, et où le cylindre 38 coulisse sur le piston hydraulique secondaire 40, c'est à dire pour une course initiale L de la cloison mobile 16, le volume de fluide déplacé par l'équipage mobile cylindre 38/piston 70 est notablement supérieur au volume de fluide déplacé par l'équipage mobile cylindre 38/piston secondaire 40 au cours de la seconde phase de fonctionnement pendant laquelle tous les éléments se déplacent ensemble, sauf le piston annulaire 70, pour obtenir la pression et l'action de freinage désirées.

Tout se passe donc comme si le piston hydraulique principal du maître-cylindre avait une section variable le long de sa course dans son alésage, sa section étant plus grande sur la première partie L de sa course que sur la deuxième partie, après avoir parcouru la distance axiale L.

Ainsi, en fonction des caractéristiques du système de freinage d'un type de véhicule sur lequel on désire installer le dispositif de freinage assisté de l'invention, et par un choix judicieux des sections transversales du piston annulaire 70 et de la partie avant 38a du cylindre 38, de la distance axiale L entre le piston annulaire 70 et l'épaulement 60 et entre la butée 90 et le piston secondaire 40 au repos, et du tarage du clapet anti-retour 80, on pourra donc bien obtenir la pression minimale de freinage effectif sans avoir besoin d'allonger d'autant le maître-cylindre, et tout en ayant une course du piston hydraulique principal 34, muni du piston annulaire 70, supérieure à la course de la tige de commande 28.

Bien entendu, l'invention n'est pas limitée aux modes de réalisation qui ont été décrits, mais elle est susceptible au contraire de recevoir de nombreuses modifications qui apparaîtront à l'homme du métier, sans sortir du cadre des revendications annexées.

## Revendications

1. Dispositif de freinage assisté pour véhicule automobile, comprenant d'une part un maître-cylindre (200) rempli d'un fluide de freinage et équipé d'un piston hydraulique principal (34) destiné à recevoir une force d'actionnement se composant d'une force d'entrée et d'une force d'assistance agissant toutes deux suivant une direction axiale (X-X'), et d'autre part un servomoteur pneumatique d'assistance (100) susceptible d'être commandé par application de la force d'entrée sur une tige de commande (28) contrôlant l'ouverture d'un clapet (26), pour exercer la force d'actionnement sur le piston hydraulique principal (34), le servomoteur (100) comportant une enveloppe rigide (10) séparée de façon étanche en deux chambres (12,14) au moyen d'une cloison mobile (16) susceptible d'être sollicitée par une différence de pression entre les deux chambres (12,14) résultant de l'ouverture du clapet (26) et d'entraîner un piston pneumatique (22) mobile par rapport à l'enveloppe (10), portant le clapet (26) et contribuant au moins à transmettre la force d'assistance, le piston hydraulique principal (34) du maître-cylindre (200) comportant lui-même un cylindre mobile creux (38) coulissant dans un alésage (62,64) et communiquant avec le maître-cylindre, recevant une partie au moins de la force d'assistance et à l'intérieur duquel coulisse sur une distance axiale (L), de façon étanche et suivant la direction axiale (X-X'), un piston hydraulique secondaire (40) susceptible de recevoir au moins la force d'entrée, la cloison mobile (16) étant montée coulissante sur le piston pneumatique (22) de manière à pouvoir coulisser sur la distance axiale (L) par rapport à lui en direction du maître-cylindre (200), depuis une position relative initiale dans laquelle elle est en butée vers l'arrière contre le piston pneumatique (22), et appuyant au moins indirectement sur le cylindre mobile (38) vers l'avant lorsqu'elle est sollicitée par une différence de pression, ce dispositif étant caractérisé en ce qu'un piston annulaire (70) est maintenu solidaire du piston hydraulique principal (34) lorsque la course de ce dernier dans l'alésage (62,64) est inférieure à la distance axiale (L), le piston annulaire (70) étant susceptible de coulisser sur le piston hydraulique principal (34) lorsque la course de ce dernier dans l'alésage (62,64) est supérieure à la distance axiale (L).

2. Dispositif de freinage assisté selon la revendication 1, caractérisé en ce que l'alésage (62,64) est étagé, et comporte un épaulement radial (60) entre une partie avant (62) de plus petit diamètre et une partie arrière (64) de plus grand diamètre, et en ce que le cylindre mobile creux (38) est étagé, et comporte un épaulement radial (66) entre une partie avant (38a) de plus petit diamètre et une partie arrière (38b) de plus grand diamètre.

3. Dispositif de freinage assisté selon la revendication 2, caractérisé en ce que le piston annulaire (70) est susceptible de coulisser de façon étanche sur la partie avant (38a) du cylindre mobile creux (38) et dans la partie arrière (64) de l'alésage étagé (62,64).

4. Dispositif de freinage assisté selon la revendication 3, caractérisé en ce que le piston annulaire (70), la partie arrière (64) de l'alésage étagé (62,64), l'épaulement (66) et la partie avant (38a) du cylindre mobile creux (38) définissent une chambre annulaire (76) de volume variable.

5. Dispositif de freinage assisté selon la revendication 4, caractérisé en ce que la chambre annulaire (76) de volume variable est susceptible de communiquer avec le volume intérieur (42) du cylindre mobile creux (38) par au moins un passage radial (78).

6. Dispositif de freinage assisté selon la revendication 5, caractérisé en ce que la communication entre la chambre annulaire (76) de volume variable et le volume intérieur (42) du cylindre mobile creux (38) est interrompue peu après que le cylindre mobile creux (38) ait parcouru la distance axiale (L).

7. Dispositif de freinage assisté selon la revendication 4, caractérisé en ce qu'un clapet anti-retour taré (80) est disposé dans une communication (82,84) entre la chambre annulaire (76) et un réservoir de fluide sous basse pression.

8. Dispositif de freinage assisté selon la revendication 4, caractérisé en ce qu'un ressort de compression (86) est disposé dans la chambre annulaire (76) entre le piston annulaire (70) et l'épaulement (66) du cylindre mobile creux (38).

9. Dispositif de freinage assisté selon l'une des revendications précédentes, caractérisé en ce que, au repos, une butée (88) formée sur la partie avant (38a) du cylindre mobile creux (38) maintient le piston annulaire (70) à la distance axiale (L) de l'épaulement 60) de l'alésage (62,64), et en ce qu'une butée (90) formée dans le cylindre mobile creux (38) est située à la distance axiale (L) d'une extrémité arrière du piston hydraulique secondaire (40).

## Patentansprüche

1. Vorrichtung zur Bremsunterstützung für Kraftfahrzeuge, mit einerseits einem Hauptzylinder (200), der mit einer Bremsflüssigkeit gefüllt und mit einem hydraulischen Hauptkolben (34) ausgestattet ist, der dazu bestimmt ist, eine Betätigungskraft aufzunehmen, die sich aus einer Eingangskraft und einer Verstärkungskraft zusammensetzt, die beide entlang einer Axialrichtung (X-X') wirken, und andererseits einem pneumatischen Unterstützungs-Servomotor (100), der durch Anlegen der Eingangskraft an eine Steuerstange (28) gesteuert werden kann, die das Öffnen eines Ventilelements (26) steuert, um die Betätigungskraft auf den hydraulischen Hauptkolben (34) auszuüben, wobei der Servomotor (100) ein starres Gehäuse (10) hat, das in dichter Weise mittels einer beweglichen Trennwand (16) in zwei Kammern unterteilt (12, 14) ist, die von einem Druckunterschied zwischen den beiden Kammern (12, 14) beaufschlagt werden kann, der sich aus dem Öffnen des Ventilelements (26) ergibt, und die einen pneumatischen Kolben (22) mitnehmen kann, der relativ zum Gehäuse (10) beweglich ist, das Ventilelement (26) trägt und zumindest dazu beiträgt, die Verstärkungskraft zu übertragen, wobei der hydraulische Hauptkolben (34) des Hauptzylinders (200) seinerseits einen beweglichen Hohlzylinder (38) umfaßt, der in einer Bohrung (62, 64) gleitet und mit dem Hauptzylinder in Verbindung steht und wenigstens einen Teil der Verstärkungskraft aufnimmt, wobei in seinem Inneren entlang einer axialen Distanz (L) ein hydraulischer Sekundärkolben (40) in dichter Weise und entlang der Axialrichtung (X-X') gleitet, der wenigstens die Eingangskraft aufnehmen kann, wobei die bewegliche Trennwand (16) verschiebbar auf dem pneumatischen Kolben (22) so angebracht ist, daß sie relativ zu diesem in Richtung zum Hauptzylinder (200) entlang der axialen Distanz (L) aus einer relativen Anfangsposition heraus verschiebbar ist, in der sie sich nach hinten in Anlage am pneumatischen Kolben (22) befindet, und sie dann, wenn sie von einem Druckunterschied beaufschlagt wird, zumindest indirekt nach vorne gegen den beweglichen Zylinder (38) drückt, wobei die Vorrichtung dadurch gekennzeichnet ist, daß ein ringförmiger Kolben (70) fest mit dem hydraulischen Hauptkolben (34) verbunden gehalten wird, wenn dessen Weg in der Bohrung (62, 64) kleiner ist als die axiale Distanz (L), wobei der ringförmige Kolben (70) auf dem hydraulischen Hauptkolben (34) gleiten kann, wenn dessen Weg in der Bohrung (62, 64) größer ist als die axiale Distanz (L).

2. Vorrichtung zur Bremsunterstützung nach Anspruch 1, dadurch gekennzeichnet, daß die Bohrung (62, 64) gestuft ist und zwischen einem vorderen Abschnitt (62) mit kleinerem Durchmesser und einem hinteren Abschnitt (64) mit größerem Durchmesser eine radiale Schulter (60) enthält und daß der bewegliche Hohlzylinder (38) gestuft ist und zwischen einem vorderen Abschnitt (38a) von kleinerem Durchmesser und einem hinteren Abschnitt (38b) von größerem Durchmesser (38b) eine radiale Schulter (66) enthält.

3. Vorrichtung zur Bremsunterstützung nach Anspruch 2, dadurch gekennzeichnet, daß der ringförmige Kolben (70) in dichter Weise auf dem vorderen Abschnitt (38a) des beweglichen Hohlzylinders (38) und im hinteren Abschnitt (64) der gestuften Bohrung (62, 64) gleiten kann.

4. Vorrichtung zur Bremsunterstützung nach Anspruch 3, dadurch gekennzeichnet, daß der ringförmige Kolben (70), der hintere Abschnitt (64) der gestuften Bohrung (62, 64), die Schulter (66) und der vordere Abschnitt (38a) des beweglichen Hohlzylinders (38) eine ringförmige Kammer (76) variablen Volumens definieren.

5. Vorrichtung zur Bremsunterstützung nach Anspruch 4, dadurch gekennzeichnet, daß die ringförmige Kammer (76) variablen Volumens mit dem Innenvolumen (42) des beweglichen Hohlzylinders (38) durch mindestens einen radialen Durchgang in Verbindung stehen kann.

6. Vorrichtung zur Bremsunterstützung nach Anspruch 5, dadurch gekennzeichnet, daß die Verbindung zwischen der ringförmigen Kammer (76) variablen Volumens und dem Innenvolumen (42) des beweglichen Hohlzylinders (38) unterbrochen wird, kurz nachdem der bewegliche Hohlzylinder (38) die axiale Distanz (L) zurückgelegt hat.

7. Vorrichtung zur Bremsunterstützung nach Anspruch 4, dadurch gekennzeichnet, daß ein austariertes Rückschlagventil (80) in der Verbindung (82, 84) zwischen der ringförmigen Kammer (76) und einem Niederdruck-Flüssigkeitsvorratsbehälter untergebracht ist.

8. Vorrichtung zur Bremsunterstützung nach Anspruch 4, dadurch gekennzeichnet, daß eine Druckfeder (86) in der ringförmigen Kammer (76) zwischen dem ringförmigen Kolben (70) und der Schulter (66) des beweglichen Hohlzylinders (38) untergebracht ist.

9. Vorrichtung zur Bremsunterstützung nach einem der vorhergehenden Ansprüche, dadurch gekennzeichnet, daß im Ruhezustand ein auf dem vorderen Abschnitt (38a) des beweglichen Hohlzylinders (38) ausgebildeter Anschlag (88) den ringförmigen Kolben (70) in der axialen Distanz (L) von der Schulter (60) der Bohrung (62, 64) hält und daß ein im beweglichen Hohlzylinder (38) ausgebildeter Anschlag (90) in einer axialen Distanz (L) von einem hinteren Ende des hydraulischen Sekundärkolbens (40) angebracht ist.

## Claims

1. Boosted braking device for a motor vehicle, comprising, on the one hand, a master cylinder (200) filled with a brake fluid and equipped with a main hydraulic piston (34) designed to receive an actuation force composed of an input force and of a boost force, both acting in an axial direction (X-X') and, on the other hand, a pneumatic booster (100) capable of being operated by application of the input force to an operating rod (28) controlling the opening of a valve (26) in order to exert the actuating force on the main hydraulic piston (34), the booster (100) including a rigid casing (10) divided in leaktight fashion into two chambers (12, 14) by means of a moving partition (16) capable of being urged by a difference in pressure, between the two chambers (12, 14), resulting from the opening of the valve (26) and of driving a pneumatic piston (22) which can move relative to the casing (10), carries the valve (26) and contributes at least to transmitting the boost force, the main hydraulic piston (34) of the master cylinder (200) itself including a hollow moving cylinder (38) sliding in a bore (62, 64) and communicating with the master cylinder, which receives at least some of the boost force and inside which a secondary hydraulic piston (40) capable of receiving at least the input force slides, over an axial distance (L), in leaktight fashion and in the axial direction (X-X'), the moving partition (16) being slidably mounted on the pneumatic piston (22) so that it can slide over the axial distance (L) relative to it in the direction of the master cylinder (200), from an initial relative position in which it is in abutment toward the rear against the pneumatic piston (22) and bearing at least indirectly on the moving cylinder (38) toward the front, when it is urged by a pressure difference, this device being characterized in that an annular piston (70) is held fast to the main hydraulic piston (34) when the travel of the latter in the bore (62, 64) is less than the axial distance (L), the annular piston (70) being capable of sliding over the main hydraulic piston (34) when the travel of the latter in the bore (62, 64) is greater than the axial distance (L).

2. Boosted braking device according to claim 1, characterized in that the bore (62, 64) is stepped, and includes a radial shoulder (60) between a smaller-diameter front part (62) and a larger-diameter rear part (64), and in that the hollow moving cylinder (38) is stepped, and includes a radial shoulder (66) between a smaller-diameter front part (38a) and a larger-diameter rear part (38b).

3. Boosted braking device according to claim 2, characterized in that the annular piston (70) is capable of sliding in leaktight fashion over the front part (38a) of the hollow moving cylinder (38) and in the rear part (64) of the stepped bore (62, 64).

4. Boosted braking device according to claim 3, characterized in that the annular piston (70), the rear part (64) of the stepped bore (62, 64), the shoulder (66) and the front part (38a) of the hollow moving cylinder (38) define a variable-volume annular chamber (76).

5. Boosted braking device according to claim 4, characterized in that the variable-volume annular chamber (76) is capable of communicating with the internal volume (42) of the hollow moving cylinder (38) via at least one radial passage (78).

6. Boosted braking device according to claim 5, characterized in that the communication between the variable-volume annular chamber (76) and the internal volume (42) of the hollow moving cylinder (38) is interrupted shortly after the hollow moving cylinder (38) has covered the axial distance (L).

7. Boosted braking device according to claim 4, characterized in that a calibrated non-return valve (80) is located in a communication passage (82, 84) between the annular chamber (76) and a low-pressure fluid reservoir.

8. Boosted braking device according to claim 4, characterized in that a compression spring (86) is located in the annular chamber (76) between the annular piston (70) and the shoulder (66) of the hollow moving cylinder (38).

9. Boosted braking device according to one of the preceding claims, characterized in that, at rest, a limit stop (88) formed on the front part (38a) of the hollow moving cylinder (38) keeps the annular piston (70) at the axial distance (L) from the shoulder (60) of the bore (62, 64), and in that a limit stop (90) formed in the hollow moving cylinder (38) is situated at the axial distance (L) from a rear end of the secondary hydraulic piston (40).
